# EUROPÄISCHE PATENTSCHRIFT

(11) **EP 1 717 470 B1**
(45) Veröffentlichungstag und Bekanntmachung des Hinweises auf die Patenterteilung: **26.10.2011**
(21) Anmeldenummer: 06007945.6
(22) Anmeldetag: 15.04.2006
(51) Int. Cl.: F16C 35/067

(54) **Lageranordnung mit zweiteiligem Lagerträger**
Bearing arrangement with two-part bearing housing
Ensemble palier avec un logement de palier en deux parties

(30) Priorität: 26.04.2005 DE 102005019655
(43) Veröffentlichungstag der Anmeldung: 02.11.2006
(73) Patentinhaber: AB SKF, 415 50 Göteborg (SE); Volkswagen Aktiengesellschaft, 38436 Wolfsburg (DE)
(72) Erfinder: Buchheim, Burkhard, 97422 Schweinfurt (DE); Dilje, Alexander, 97422 Schweinfurt (DE); Hauck, Helmut, 97502 Euerbach (DE); Stürzenberger, Jürgen, 97424 Schweinfurt (DE); Sprenger, Ralph, 38518 Gifhorn (DE); Zimmermann, Steffen, 39114 Magdeburg (DE)
(74) Vertreter: Gosdin, Michael

(56) Entgegenhaltungen:
- EP-A- 0 598 664
- DE-A1- 3 147 853
- DE-A1- 10 001 575
- DE-A1- 19 937 396
- DE-C- 19 936 103

## Beschreibung

Die Erfindung betrifft eine Lageranordnung, bestehend aus einem Lagerträger und zwei Lagern, die von dem Lagerträger gehalten werden, wobei die beiden Lager nebeneinander so im Lagerträger angeordnet sind, dass ihre Achsen parallel zueinander verlaufen und sich die Lager im wesentlichen auf gleicher axialer Höhe befinden, wobei der Lagerträger zweiteilig ausgebildet ist, wobei die Trennebene der beiden Teile des Lagerträgers beide Achsen der beiden Lager beinhaltet und wobei beide Teile des Lagerträgers bleibend miteinander verbunden sind.

Lageranordnungen dieser Art sind im Stand der Technik bekannt. Aus der DE 42 06 899 C1, aus der DE 199 36 103 C2, aus der DE 24 20 087 A1 und aus der DE 693 17 215 T2 ist es bekannt, zwei Lager, die sich in radialem Abstand zueinander befinden, dadurch zu lagern, dass das sie tragende Gehäuse geteilt ausgebildet wird. Mit den beiden Gehäusehälften werden die beiden Lagerringe der Lager umschlossen und die Hälften dann bleibend verbunden, wobei eine Schraubverbindung zum Einsatz kommt. Eine ähnliche Lösung zeigt die DE 31 47 853 A1.

In der DE 100 01 575 A1 wird ein Lagerträger offenbart, der zwei Wälzlager trägt. Der Lagerträger ist als tiefgezogenes Bauteil ausgebildet und weist zwei napfförmige Vertiefungen für die Aufnahme des Wälzlagers auf. Damit die beiden Lager fest im Lagerträger angeordnet sind, wird nach dem Einsetzen der Lager in die vorgesehenen Vertiefungen durch Verstemmen etwas Material des Lagerträgers so umgefonnt, dass ein Formschluss vorliegt, der die beiden Lager am Herausfallen bzw. am Heraustreten aus ihrer vorgesehenen Aufnahme hindert.

Das Herstellverfahren der vorbekannten Lageranordnungen stellt einen nicht unerheblichen fertigungstechnischen Aufwand dar, da die Lageraufnahme durch einen Tiefziehprozess erfolgen muss, durch den die napfförmigen Vertiefungen gebildet werden.

Ferner ergibt sich, dass hohe Betriebslasten der Lageranordnung in der Regel eine hohe Vorspannkraft des Systems erfordern, was nur durch eine Wärmebehandlung des Lagerträgers erreicht werden kann. In diesem Falle fällt jedoch das kostengünstige Verstemmen als Mittel zum Festlegen des Lagers im Lagerträger weg. Man muss in diesem Falle beispielsweise zu einer Lösung wechseln, bei der der Lagerträger in eine Trägemut im Lagerring eingeschnappt wird.

Aus der DE 200 19 278 U1 geht eine solche Lageranordnung hervor, bei der vorgesehen ist, dass der Lagerträger im Wesentlichen eben ausgebildet ist und in eine Eindrehung im Außenring des Wälzlagers eingreift. Dabei weist der Lagerträger in einer Aufnahmebohrung für das Lager eine Anzahl radial nach innen vorstehende Vorsprünge auf, die in die Eindrehung im Lagerring eingreifen, wobei die Eindrehung im Schnitt eine unter Winkel axial nach innen abfallende Form aufweist, so dass bei eingeschnappten Vorsprüngen der Lagerträger mit axialem Hinterschnitt in die Lagerring-Eindrehung eingreift.

Damit kann in fertigungstechnisch einfacher Weise erreicht werden, dass die beiden Lager mit dem Lagerträger verbunden werden, wobei es möglich wird, dass in einer der Achsrichtungen hohe Lagerkräfte übertragen werden können.

Nachteilig bei solchen Lösungen ist es, dass in die andere Lagerachsrichtung keine nennenswerten Kräfte übertragen werden können. Bei zu hoher axialer Kraft in "Abziehrichtung" des Lagerträgers von der Eindrehung im Lagerring besteht die Gefahr, dass sich die Verbindung zwischen Lagerträger und Lager wieder löst, d. h. der Lagerträger wieder vom Lager abspringt. Dies ergibt sich durch den Umstand, dass die Überdeckung zwischen Eindrehung und Vorsprüngen nur minimal sein kann, um eine Montage (Aufschnappen) noch ermöglichen zu können.

Fertigungstechnische Probleme ergeben sich bei dieser Lösung auch durch folgenden Umstand: Der Lagerträger muss, wie erwähnt, für eine hinreichend hohe Festigkeit gehärtet sein, was allerdings zur Folge hat, dass der Lagerträger infolge Härteverzug relativ große Formtoleranzen aufweist. Daher ist es bei der genannten Lösung nachteilig, dass hohe Anforderungen an die Fertigung der zusammenwirkenden Teile Lagerträger und Wälzlager gestellt werden müssen. Namentlich muss die Aufnahmenut im Lagering in der Regel geschliffen werden, damit die relativ großen verzugsbedingten Toleranzen des Lagerträgers ausgeglichen werden können. Das Härten führt zu einer erheblichen Vergrößerung der Maß- und Formtoleranzen im Lagerträger, die entweder durch spanende Nacharbeit oder durch hochpräzise Eindrehungen im Lagerring ausgeglichen werden müssen.

Der Erfindung liegt daher die **Aufgabe** zugrunde, eine Lageranordnung der eingangs genannten Art so weiterzubilden, dass sie sich durch eine kostengünstige Fertigungsmethode auszeichnet und es ermöglicht, in beiden Lagerachsrichtungen hohe Kräfte zu übertragen.

Die **Lösung** dieser Aufgabe durch die Erfindung ist dadurch gekennzeichnet, dass jedes Teil des Lagerträgers im Bereich der Trennebene je zwei unmittelbar benachbarte Ausnehmungen mit halbkreisförmiger Kontur aufweisen, wobei die Außenringe beider Lager jeweils eine in Umfangsrichtung umlaufende Nut aufweisen, in die ein Griffabschnitt der Teile des Lagerträgers eingreift.

Damit ist es möglich, eine feste Verbindung zwischen Lagern und Lagerträger zu erreichen, die in der Lage ist, in beiden Achsrichtungen hohe Kräfte zu übertragen. Der Einsatz gehärteten Materials als Teile des Lagerträgers macht keine Probleme. Gleichermaßen ist auch keine besonders hohe Fertigungstoleranz bei der Herstellung der benötigten Teile des Lagerträgers bzw. der Lager erforderlich, um trotzdem eine problemlose Montage sicherzustellen.

Als Lager kommen bevorzugt Wälzlager zum Einsatz.

Die Lageranordnung eignet sich besonders dafür, zwei Lager in sehr enger Nachbarschaft anzuordnen, wie es bei Anwendungen im PKW-Getriebebau typisch ist.

Mit Vorteil entspricht die Dicke des Griffabschnitts der Teile des Lagerträgers der Breite der Nut. Der Griffabschnitt kann auch geringfügig dünner als die Nutbreite ausgeführt werden, um die Montage einfach zu halten, d. h. es kann ein geringes Spiel der Griffabschnitte in den Nuten vorgesehen werden. Bevorzugt weist dabei der gesamte Lagerträger die Dicke des Griffabschnitts der Teile des Lagerträgers auf. Weiterhin kann der Lagerträger und seine Teile aus einem Blech mit der Dicke des Griffabschnitts gefertigt sein.

Der Lagerträger kann im Wesentlichen eine ebene, vorzugsweise weitgehend rechteckförmige Kontur aufweisen, in die die Ausnehmungen für die Lager eingebracht sind.

Für einen stabilen Verbund von Lagerträger und Lagern ist eine bleibende Verbindung der beiden Teile des Lagerträgers vorgesehen. Mit Vorteil erfolgt die Verbindung der beiden Teile des Lagerträgers dabei durch Schweißen, wobei Elektroschweißen, Autogenschweißen, Schutzgasschweißen Laserschweißen oder Elektronenstrahlschweißen eingesetzt werden kann.

Alternativ hierzu kann auch Löten eingesetzt werden, wobei besonders an Hartlöten gedacht ist.

Der Lagerträger kann durch einen Umformprozess und/oder einen Stanzprozess gebildet, d. h. hergestellt werden, wobei der Prozess die Teilung eines Grundbauteils des Lagerträgers zur Schaffung zweier separater Teile des Lagerträgers beinhalten kann. Dabei kann das Teilen des zunächst noch einteiligen Lagerträgers in die beiden Teile durch Stanzen den letzten Vorgang der Produktion des Lagerträgers bilden.

Um den Lagerträger an einem weiteren Maschinenteil festzulegen, weist er bzw. seine Teile, vorzugsweise in seinem äußeren Bereich, in üblicher Weise eine Anzahl Befestigungselemente aufweist. Dabei kann es sich um Bohrungen zum Durchtritt einer Schraube oder um mit einem Gewinde versehene Bohrungen zum Zusammenwirken mit einer Schraube handeln. Der Lagerträger bzw. seine Teile können dabei, um eine höhere Festigkeit zu erreichen, im Bereich der Befestigungselemente eine vergrößerte Dicke aufweisen.

Mit Vorteil besteht der Lagerträger bzw. seine Teile aus gehärtetem Stahl.

Der Erfindungsvorschlag ermöglicht eine einfache Verbindung von Lagerträger und Lagern, wobei nach der Verbindung der beiden Teile des Lagerträgers sichergestellt ist, dass hohe Axiallasten in beiden Lagerachsrichtungen übertragen werden können.

Die vorgeschlagene Lageranordnung kommt bevorzugt in Pkw-Getrieben zum Einsatz. Grundsätzlich geeignet ist sie jedoch für alle Anwendungen, bei denen das Lager mit einem Lagerträger verbunden als Einheit eingesetzt wird.

In der Zeichnung ist ein Ausführungsbeispiel der Erfindung dargestellt. Es zeigen:
- Figur 1: die Draufsicht auf einen Lagerträger mit zwei Lagern gemäß dem Stand der Technik,
- Figur 2: die Draufsicht auf einen zweiteilig ausgebildeten Lagerträger sowie auf die beiden von ihm gehaltenen Lager vor der Montage,
- Figur 3: eine zu Fig. 2 entsprechende Darstellung während der Montage der Lager in den Lagerträger,
- Figur 4: die zu Fig. 2 bzw. 3 entsprechende Darstellung nach Abschluss der Montage der Lager in den Lagerträger und
- Figur 5: den Schnitt A-B gemäß Fig. 4 durch den Außenring eines der Lager.

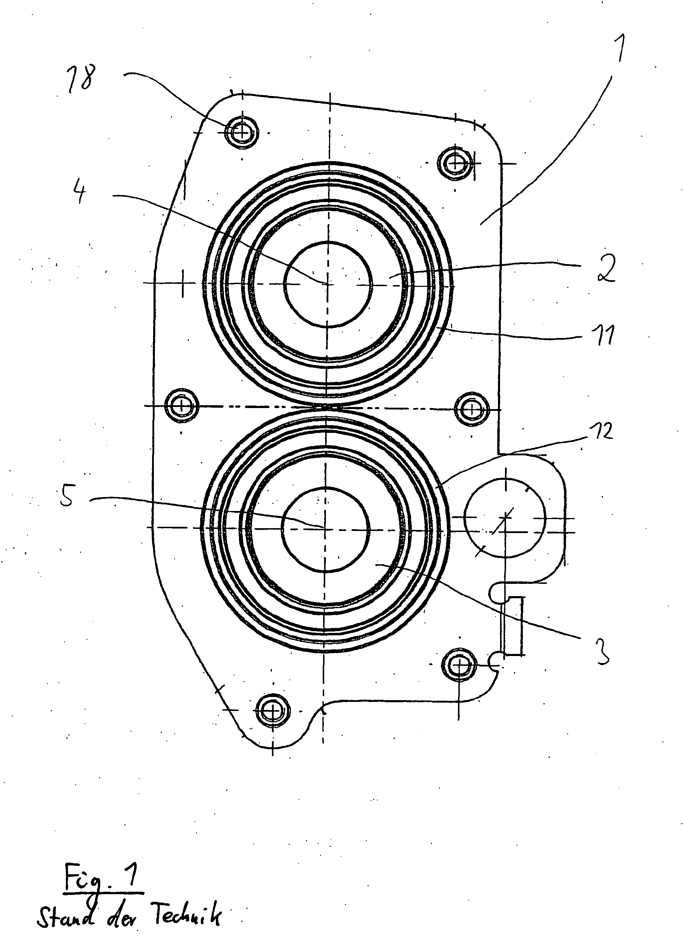

In Figur 1 ist ein Lagerträger 1 gemäß dem Stand der Technik zu sehen. Er besteht aus einem tiefgezogenen Blechteil, das napfförmige Vertiefungen für die Aufnahme zweier Wälzlager 2 und 3 aufweist. Dabei werden die Außenringe 11 und 12 der Lager 2, 3 von den Vertiefungen aufgenommen. Nicht näher zu erkennen ist, dass die Außenringe 2, 3 nach dem Einsetzen in die Vertiefungen durch einen Verstemmvorgang (Umformvorgang) des Lagerträgers in den Vertiefungen fixiert werden, so dass sie in beiden Lagerachsrichtungen relativ zum Lagerträger 1 festgelegt sind. Die beiden Achsen 4 und 5 der Lager 2 und 3 stehen in Fig. 1 senkrecht auf der Zeichenebene. Die Festlegung des Lagerträgers 1 an einem Maschinenteil, z. B. an dem Gehäuse eines PKW-Getriebes, erfolgt mit den Befestigungselementen 18.

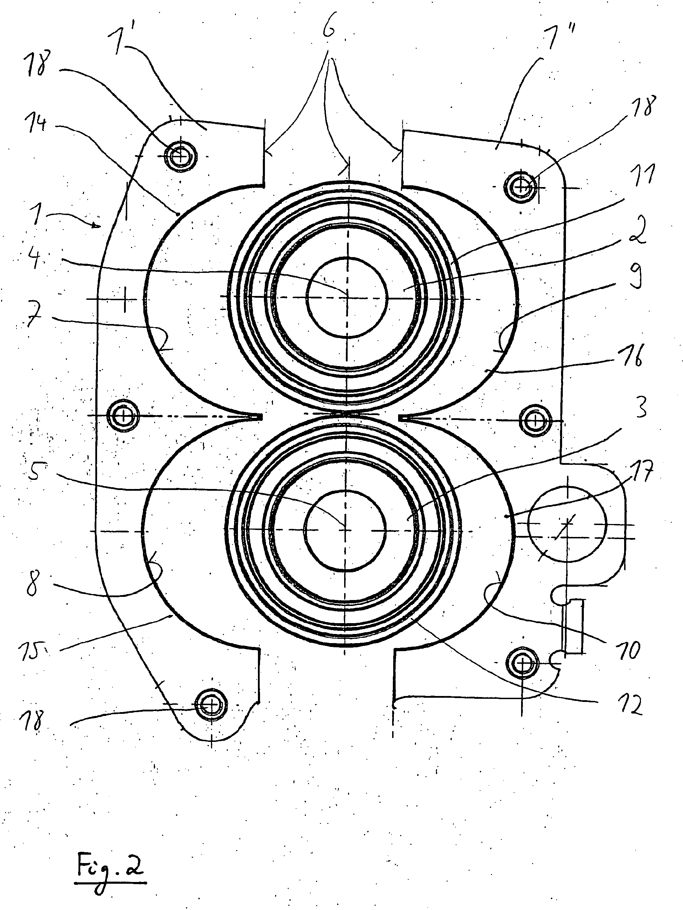

In Fig. 2 ist demgegenüber der Aufbau des erfindungsgemäßen Lagerträgers 1 zu sehen. Auch dieser legt zwei Wälzlager 2 und 3 sowohl radial als auch axial fest. Hierzu besteht der Lagerträger 1 aus zwei Teilen 1' und 1", die an einer Trennebene 6 den Lagerträger 1 teilen. Diese Trennebene 6 steht in Fig. 2 senkrecht auf der Zeichenebene und enthält die beiden Lagerachsen 4 und 5.

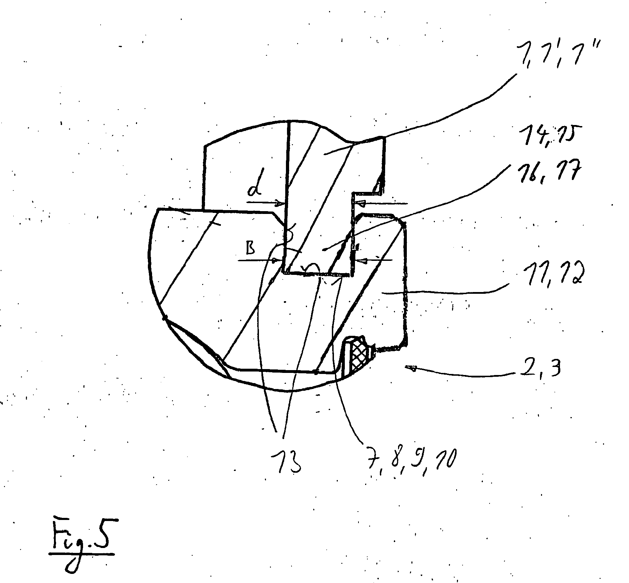

Jedes Teil 1', 1" des Lagerträgers 1 weist zwei halbkreisförmig ausgebildete Ausnehmungen 7, 8, 9, 10 auf, die hinsichtlich des Durchmessers der Kreisbahn dem Grund einer Nut 13 (s. Fig. 5) entsprechen, die in den Außenring 11, 12 der Wälzlager 2, 3 eingearbeitet ist. Bei dieser Nut 13 handelt es sich um eine Ringnut, die in den Außenring 11, 12 eingedreht ist.

Wie Fig. 5 zu entnehmen ist, entspricht die Breite B der Nut 13 im wesentlichen der Dicke d von Griffabschnitten 14, 15, 16, 17, mit denen die Teile 1', 1" des Lagerträgers 1 in die Nut 13 hineinragen, um so das Lager 2, 3 zu halten. Wie es in Fig. 5 gesehen werden kann, kann sich die Breite des Lagerträgers 1 außerhalb der Griffabschnitte 14, 15, 16, 17 vergrößern. Es kann aber auch vorgesehen sein, dass der gesamte Lagerträger 1 bzw. seine Teile 1', 1" aus einem Blech der Dicke d besteht.

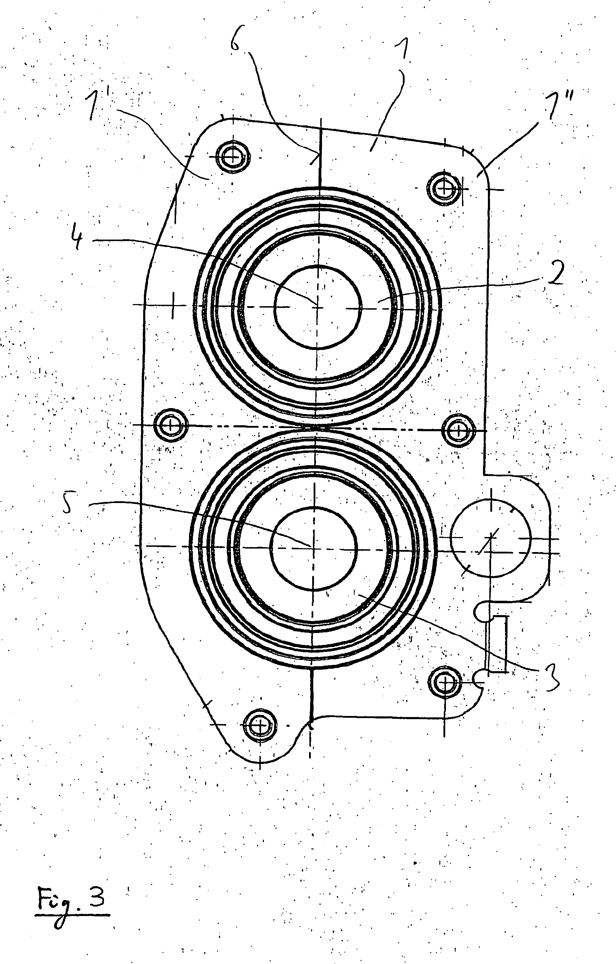

In Fig. 2 ist die Situation dargestellt, die sich vor der Montage der Lager 2, 3 in den Lagerträger 1 ergibt. Die beiden Teile 1', 1" des Lagerträgers 1 befinden sich jeweils seitlich der beiden vorpositionierten Lager 2, 3. Bei der weiteren Montage werden die beiden Teile 1', 1" in Richtung der Lager 2, 3 eingeschoben (in Fig. 2 also das Teil 1' nach rechts und das Teil 1" nach links), bis sich die in Fig. 3 skizzierte Lage ergibt. Hier greifen die Griffabschnitte 14, 15, 16, 17 in die Nuten 13 in den beiden Lageraußenringen 11, 12 ein, so dass beide Lager 2, 3 relativ zum Lagerträger 1 sowohl radial aus auch axial festgelegt sind, und zwar in beide axiale Richtungen.

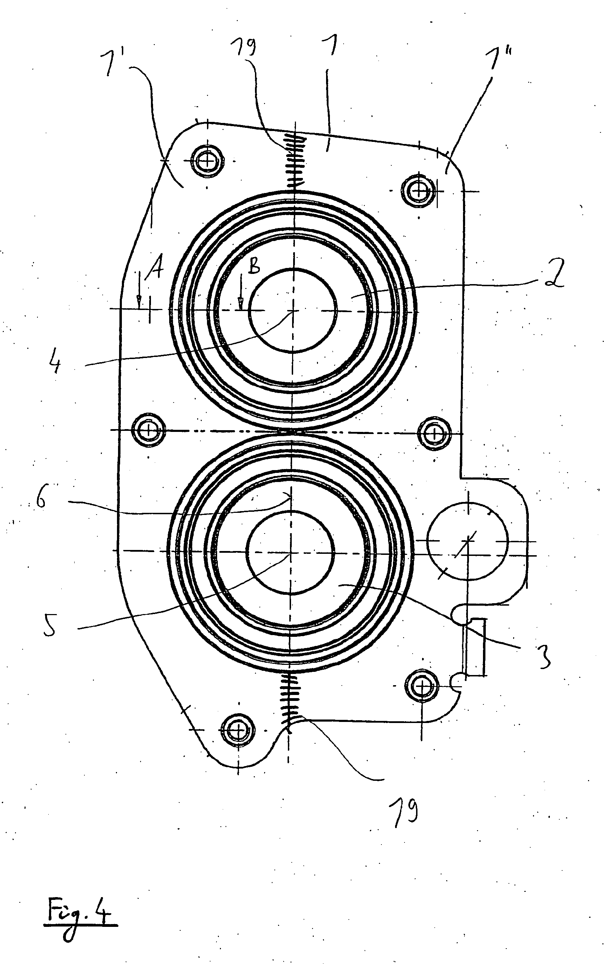

Damit sich ein stabiler Verbund des Lagerträgers 1 mit den beiden Lagern 2, 3 ergibt, werden nun die beiden Teile 1', 1" des Lagerträgers 1 bleibend miteinander verbunden. Dies ist in Fig. 4 angedeutet, wo zwei Schweißnähte 19 eingezeichnet sind, die die beiden Teile 1' und 1" permanent miteinander verbinden. Fig. 4 stellt daher den letzten Schritt der Montage der Lager 2, 3 in den Lagerträger 1 dar.

Der Lagerträger 1 kann nach der Montage der Lager 2, 3 in bekannter Weise an einem weiteren Maschinenteil festgelegt werden, wofür Befestigungselemente 18 vorgesehen sind. Es kann sich bei diesen um Durchgangsbohrungen für den Durchtritt eines Schraubenschaftes oder um Gewindebohrungen handeln.

Gegebenenfalls führt die erfindungsgemäße Lageranordnung zu einer Vereinfachung des Gehäuses bzw. des Lagersitzdesigns, was Kosten reduziert. Ferner ist eine höhere axiale Flächenpressung zwischen Lagerträger und Lagern möglich, da sowohl der Lagerträger als auch die Lager aus Stahl gefertigt werden können. Bei vorbekannten Lösungen sind oft Stahl-Aluminium-Paarungen vorgesehen, die nicht für hohe Flächenpressungen geeignet sind.

Bei der Herstellung des Lagerträgers sind gleichermaßen keine höheren Kosten im Verhältnis zu üblichen Pressen-Kosten zu erwarten, da das übliche Press-Verfahren beibehalten werden kann, wobei lediglich im letzten Press-Teilschritt die Teilung des Lagerträgers in die beiden Hälften vorgenommen werden muss.

### Bezugszeichenliste

- 1: Lagerträger
- 1': Teil des Lagerträgers
- 1": Teil des Lagerträgers
- 2: Lager (Wälzlager)
- 3: Lager (Wälzlager)
- 4: Achse des Lagers
- 5: Achse des Lagers
- 6: Trennebene
- 7: Ausnehmung
- 8: Ausnehmung
- 9: Ausnehmung
- 10: Ausnehmung
- 11: Außenring
- 12: Außenring
- 13: Nut
- 14: Griffabschnitt
- 15: Griffabschnitt
- 16: Griffabschnitt
- 17: Griffabschnitt
- 18: Befestigungselement
- 19: Schweißnaht

- d: Dicke des Griffabschnitts
- B: Breite der Nut

## Patentansprüche

1. Lageranordnung, bestehend aus einem Lagerträger (1) und zwei Lagern (2, 3), die von dem Lagerträger (1) gehalten werden, wobei die beiden Lager (2, 3) nebeneinander so im Lagerträger (1) angeordnet sind, dass ihre Achsen (4, S) parallel zueinander verlaufen und sich die Lager (2, 3) im wesentlichen auf gleicher axialer Höhe befinden, wobei der Lagerträger (1) zweiteilig (1', 1") ausgebildet ist, wobei die Trennebene (6) der beiden Teile (1', 1") des Lagerträgers (1) beide Achsen (4, 5) der beiden Lager (2, 3) beinhaltet und wobei beide Teile (1', 1") des Lagerträgers (1) bleibend miteinander verbunden sind, **dadurch gekennzeichnet, dass** jedes Teil (1', 1") des Lagerträgers (1) im Bereich der Trennebene (6) je zwei unmittelbar benachbarte Ausnehmungen (7, 8, 9, 10) mit halbkreisförmiger Kontur aufweisen, wobei die Außenring (11, 12) beider Lager (2, 3) jeweils eine in Umfangsrichtung umlaufende Nut (13) aufweisen, in die ein Griffabschnitt (14, 15, 16, 17) der Teile (1', 1") des Lagerträgers (1) eingreift.

2. Lageranordnung nach Anspruch 1, **dadurch gekennzeichnet, dass** die Lager (2, 3) Wälzlager sind.

3. Lageranordnung nach Anspruch 1 oder 2, **dadurch gekennzeichnet, dass** die Dicke (d) des Griffabschnitts (14, 15, 16, 17) der Teile (1', 1") des Lagerträgers (1) der Breite (B) der Nut (13) entspricht.

4. Lageranordnung nach Anspruch 3, **dadurch gekennzeichnet, dass** der gesamte Lagerträger (1) die Dicke (d) des Griffabschnitts (14, 15, 16, 17) der Teile (1', 1") des Lagerträgers (1) aufweist.

5. Lageranordnung nach Anspruch 4, **dadurch gekennzeichnet, dass** der Lagerträger (1) und seine Teile (1', 1") aus einem Blech mit der Dicke (d) des Griffabschnitts (14, 15, 16, 17) gefertigt ist.

6. Lageranordnung nach einem der Ansprüche 1 bis 5, **dadurch gekennzeichnet, dass** der Lagerträger (1) im wesentlichen eine ebene, vorzugsweise weitgehend rechteckförmige Kontur aufweist, in die die Ausnehmungen (7, 8, 9, 10) für die Lager (2, 3) eingebracht sind.

7. Lageranordnung nach einem der Ansprüche 1 bis 6, **dadurch gekennzeichnet, dass** die Verbindung der beiden Teile (1', 1") des Lagerträgers (1) durch Schweißen erfolgt.

8. Lageranordnung nach Anspruch 7, **dadurch gekennzeichnet, dass** die Verbindung der beiden Teile (1', 1") des Lagerträgers (1) durch Elektroschweißen erfolgt.

9. Lageranordnung nach Anspruch 7, **dadurch gekennzeichnet, dass** die Verbindung der beiden Teile (1', 1") des Lagerträgers (1) durch Autogenschweißen erfolgt.

10. Lageranordnung nach Anspruch 7, **dadurch gekennzeichnet, dass** die Verbindung der beiden Teile (1', 1") des Lagerträgers (1) durch Schutzgasschweißen erfolgt.

11. Lageranordnung nach Anspruch 7, **dadurch gekennzeichnet, dass** die Verbindung der beiden Teile (1', 1") des Lagerträgers (1) durch Laserschweißen erfolgt.

12. Lageranordnung nach Anspruch 7, **dadurch gekennzeichnet, dass** die Verbindung der beiden Teile (1', 1") des Lagerträgers (1) durch Elektronenstrahlschweißen erfolgt.

13. Lageranordnung nach einem der Ansprüche 1 bis 6, **dadurch gekennzeichnet, dass** die Verbindung der beiden Teile (1', 1") des Lagerträgers (1) durch Löten erfolgt.

14. Lageranordnung nach Anspruch 13, **dadurch gekennzeichnet, dass** die Verbindung der beiden Teile (1', 1") des Lagerträgers (1) durch Hartlöten erfolgt.

15. Lageranordnung nach einem der Ansprüche 1 bis 14, **dadurch gekennzeichnet, dass** der Lagerträger (1) durch einen Umformprozess und/oder einen Stanzprozess hergestellt ist, wobei der Prozess die Teilung eines Grundbauteils des Lagerträgers (1) zur Schaffung zweier separater Teile (1', 1") des Lagerträgers (1) beinhaltet.

16. Lageranordnung nach einem der Ansprüche 1 bis 15, **dadurch gekennzeichnet, dass** der Lagerträger (1) bzw. seine Teile (1', 1"), vorzugsweise in seinem äußeren Bereich, eine Anzahl Befestigungselemente (18) aufweist.

17. Lageranordnung nach Anspruch 16, **dadurch gekennzeichnet, dass** die Befestigungselemente (18) Bohrungen zum Durchtritt einer Schraube sind.

18. Lageranordnung nach Anspruch 16, **dadurch gekennzeichnet, dass** die Befestigungselemente (18) mit einem Gewinde versehene Bohrungen zum Zusammenwirken mit einer Schraube sind.

19. Lageranordnung nach einem der Ansprüche 16 bis 18, **dadurch gekennzeichnet, dass** der Lagerträger (1) bzw. seine Teile (1', 1") im Bereich der Befestigungselemente (18) eine vergrößerte Dicke aufweist.

20. Lageranordnung nach einem der Ansprüche 1 bis 19, **dadurch gekennzeichnet, dass** der Lagerträger (1) bzw. seine Teile (1', 1") aus gehärtetem Stahl besteht bzw. bestehen.

## Claims

1. Bearing arrangement, composed of a bearing carrier (1) and two bearings (2, 3) which are held by the bearing carrier (1), the two bearings (2, 3) being arranged adjacent to one another in the bearing carrier (1) such that their axes (4, 5) run parallel to one another and the bearings (2, 3) are situated at substantially the same axial level, the bearing carrier (1) being formed in two parts (1', 1"), the parting plane (6) of the two parts (1', 1") of the bearing carrier (1) comprising the two axes (4, 5) of the two bearings (2, 3), and the two parts (1', 1") of the bearing carrier (1) being permanently connected to one another, **characterized in that** each part (1', 1") of the bearing carrier (1) has, in the region of the parting plane (6), in each case two directly adjacent recesses (7, 8, 9, 10) of semi-circular contour, the outer rings (11, 12) of the two bearings (2, 3) having in each case a groove (13) which runs around in the circumferential direction and into which an engagement section (14, 15, 16, 17) of the parts (1', 1") of the bearing carrier (1) engages.

2. Bearing arrangement according to Claim 1, **characterized in that** the bearings (2, 3) are rolling bearings.

3. Bearing arrangement according to Claim 1 or 2, **characterized in that** the thickness (d) of the engagement section (14, 15, 16, 17) of the parts (1', 1") of the bearing carrier (1) corresponds to the width (B) of the groove (13).

4. Bearing arrangement according to Claim 3, **characterized in that** the entire bearing carrier (1) has the thickness (d) of the engagement section (14, 15, 16, 17) of the parts (1', 1") of the bearing carrier (1).

5. Bearing arrangement according to Claim 4, **characterized in that** the bearing carrier (1) and its parts (1', 1") is produced from a metal sheet with the thickness (d) of the engagement section (14, 15, 16, 17).

6. Bearing arrangement according to one of Claims 1 to 5, **characterized in that** the bearing carrier (1) has substantially a planar, preferably substantially rectangular contour into which the recesses (7, 8, 9, 10) for the bearings (2, 3) are formed.

7. Bearing arrangement according to one of Claims 1 to 6, **characterized in that** the two parts (1', 1") of the bearing carrier (1) are connected by wielding.

8. Bearing arrangement according to Claim 7, **characterized in that** the two parts (1', 1") of the bearing carrier (1) are connected by arc wielding.

9. Bearing arrangement according to Claim 7, **characterized in that** the two parts (1', 1") of the bearing carrier (1) are connected by autogenous welding.

10. Bearing arrangement according to Claim 7, **characterized in that** the two parts (1', 1") of the bearing carrier (1) are connected by gasshielded welding.

11. Bearing arrangement according to Claim 7, **characterized in that** the two parts (1', 1") of the bearing carrier (1) are connected by laser welding.

12. Bearing arrangement according to Claim 7, **characterized in that** the two parts (1', 1") of the bearing carrier (1) are connected by electron beam welding.

13. Bearing arrangement according to one of Claims 1 to 6, **characterized in that** the two parts (1', 1") of the bearing carrier (1) are connected by soldering.

14. Bearing arrangement according to Claim 13, **characterized in that** the two parts (1', 1") of the bearing carrier (1) are connected by brazing.

15. Bearing arrangement according to one of Claims 1 to 14, **characterized in that** the bearing carrier (1) is produced by means of a deformation process and/or a punching process, wherein the process comprises the splitting of a basic component of the bearing carrier (1) to create two separate parts (1', 1") of the bearing carrier (1).

16. Bearing arrangement according to one of Claims 1 to 15, **characterized in that** the bearing carrier (1) or the parts (1', 1") thereof has, preferably in its outer region, a number of fastening elements (18).

17. Bearing arrangement according to Claim 16, **characterized in that** the fastening elements (18) are bores for the passage of a screw.

18. Bearing arrangement according to Claim 16, **characterized in that** the fastening elements (18) are threaded bores for interacting with a screw.

19. Bearing arrangement according to one of Claims 16 to 18, **characterized in that** the bearing carrier (1) or the parts (1', 1") thereof has an increased thickness in the region of the fastening elements (18).

20. Bearing arrangement according to one of Claims 1 to 19, **characterized in that** the bearing carrier (1) or the parts (1', 1") thereof is or are composed of hardened steel.

## Revendications

1. Ensemble de palier, composé d'un logement de palier (1) et de deux paliers (2, 3) qui sont tenus par le logement de palier (1), dans lequel les deux paliers (2, 3) sont disposés l'un à côté de l'autre dans le logement de palier (1) de telle manière que leurs axes (4, 5) soient parallèles l'un à l'autre et que les paliers (2, 3) se trouvent essentiellement à la même hauteur axiale, dans lequel le logement de palier (1) est réalisé en deux parties (1', 1"), dans lequel le plan de séparation (6) des deux parties (1', 1") du logement de palier (1) contient les deux axes (4, 5) des deux paliers (2, 3) et dans lequel les deux parties (1', 1") du logement de palier (1) sont assemblées en permanence l'une à l'autre, **caractérisé en ce que** chaque partie (1', 1") du logement de palier (1) présente respectivement, dans la région du plan de séparation (6), deux évidements de contour semi-circulaire (7, 8, 9, 10) directement adjacents, dans lequel les bagues extérieures (11, 12) des deux paliers (2, 3) présentent respectivement une rainure (13) s'étendant en direction périphérique, dans laquelle une partie d'accrochage (14, 15, 16, 17) des parties (1', 1") du logement de palier (1) s'engage.

2. Ensemble de palier selon la revendication 1, **caractérisé en ce que** les paliers (2, 3) sont des paliers à roulement.

3. Ensemble de palier selon la revendication 1 ou 2, **caractérisé en ce que** l'épaisseur (d) de la partie d'accrochage (14, 15, 16, 17) des parties (1', 1") du logement de palier (1) correspond à la largeur (B) de la rainure (13).

4. Ensemble de palier selon la revendication 3, **caractérisé en ce que** tout le logement de palier (1) présente l'épaisseur (d) de la partie d'accrochage (14, 15, 16, 17) des parties (1', 1") du logement de palier (1).

5. Ensemble de palier selon la revendication 4, **caractérisé en ce que** le logement de palier (1) et ses parties (1', 1") est fabriqué en une tôle présentant l'épaisseur (d) de la partie d'accrochage (14, 15, 16, 17).

6. Ensemble de palier selon l'une quelconque des revendications 1 à 5, **caractérisé en ce que** le logement de palier (1) présente essentiellement un contour plan, de préférence largement rectangulaire, dans lequel les évidements (7, 8, 9, 10) pour les paliers (2, 3) sont pratiqués.

7. Ensemble de palier selon l'une quelconque des revendications 1 à 6, **caractérisé en ce que** l'assemblage des deux parties (1', 1") du logement de palier (1) est réalisé par soudage.

8. Ensemble de palier selon la revendication 7, **caractérisé en ce que** l'assemblage des deux parties (1', 1") du logement de palier (1) est réalisé par électrosoudage.

9. Ensemble de palier selon la revendication 7, **caractérisé en ce que** l'assemblage des deux parties (1', 1") du logement de palier (1) est réalisé par soudage autogène.

10. Ensemble de palier selon la revendication 7, **caractérisé en ce que** l'assemblage des deux parties (1', 1") du logement de palier (1) est réalisé par soudage sous gaz protecteur.

11. Ensemble de palier selon la revendication 7, **caractérisé en ce que** l'assemblage des deux parties (1', 1") du logement de palier (1) est réalisé par soudage au laser.

12. Ensemble de palier selon la revendication 7, **caractérisé en ce que** l'assemblage des deux parties (1', 1") du logement de palier (1) est réalisé par soudage au faisceau d'électrons.

13. Ensemble de palier selon l'une quelconque des revendications 1 à 6, **caractérisé en ce que** l'assemblage des deux parties (1', 1") du logement de palier (1) est réalisé par brasage.

14. Ensemble de palier selon la revendication 13, **caractérisé en ce que** l'assemblage des deux parties (1', 1") du logement de palier (1) est réalisé par brasage dur.

15. Ensemble de palier selon l'une quelconque des revendications 1 à 14, **caractérisé en ce que** le logement de palier (1) est fabriqué par un procédé de déformation et/ou un procédé d'emboutissage, dans lequel le procédé comprend la séparation d'une pièce de base du logement de palier (1) pour la création des deux parties séparées (1', 1") du logement de palier (1).

16. Ensemble de palier selon l'une quelconque des revendications 1 à 15, **caractérisé en ce que** le logement de palier (1) ou ses parties (1', 1") présente, de préférence dans sa région extérieure, plusieurs éléments de fixation (18).

17. Ensemble de palier selon la revendication 16, **caractérisé en ce que** les éléments de fixation (18) sont des perçages pour le passage d'une vis.

18. Ensemble de palier selon la revendication 16, **caractérisé en ce que** les éléments de fixation (18) sont des perçages munis d'un filet destiné à coopérer avec une vis.

19. Ensemble de palier selon l'une quelconque des revendications 16 à 18, **caractérisé en ce que** le logement de palier (1) ou ses parties (1', 1") présente une épaisseur accrue dans la région des éléments de fixation (18).

20. Ensemble de palier selon l'une quelconque des revendications 1 à 19, **caractérisé en ce que** le logement de palier (1) ou ses parties (1', 1") se compose(nt) d'acier trempé.
